# EUROPÄISCHE PATENTSCHRIFT

(11) **EP 1 763 692 B1**
(45) Veröffentlichungstag und Bekanntmachung des Hinweises auf die Patenterteilung: **13.03.2013**
(21) Anmeldenummer: 05770642.6
(22) Anmeldetag: 02.07.2005
(51) Int. Cl.: G02B 7/16, G02B 21/24

(54) **MIKROSKOP MIT EINER WECHSELEINRICHTUNG ZUR AUFNAHME OPTISCHER ELEMENTE**
MICROSCOPE WITH A REPLACEMENT DEVICE FOR OPTICAL ELEMENTS
MICROSCOPE AVEC SUPPORT D'ELEMENTS INTERCHANGEABLES POUR ELEMENTS OPTIQUES

(30) Priorität: 06.07.2004 DE 102004032556
(43) Veröffentlichungstag der Anmeldung: 21.03.2007
(73) Patentinhaber: Carl Zeiss Microscopy GmbH, 07745 Jena (DE)
(72) Erfinder: BÖKER, Christian, 37130 Gleichen (DE); TANDLER, Hans, 07745 Jena (DE)
(86) Internationale Anmeldenummer: PCT/EP2005/007154
(87) Internationale Veröffentlichungsnummer: WO 2006/002961

(56) Entgegenhaltungen:
- EP-A2- 1 093 002
- DE-A1- 3 627 185
- US-A- 3 930 712
- US-A1- 2002 097 486
- US-B1- 6 384 992
- PATENT ABSTRACTS OF JAPAN Bd. 1996, Nr. 09, 30. September 1996 (1996-09-30) & JP 08 136818 A (OLYMPUS OPTICAL CO LTD), 31. Mai 1996 (1996-05-31)

## Beschreibung

Die Erfindung betrifft ein Mikroskop mit einer Wechseleinrichtung zur Aufnahme optischer Elemente, insbesondere für Mikroskope, zur Realisierung einer Auflichtbeleuchtung von Präparaten oder Objekten und deren Beobachtung durch eine entsprechende Ausbildung und Führung des Strahlenganges durch Strahlenteilungen und/oder Strahlumlenkungen.

Dazu sind Reflektorschieber bei Mikroskopen bekannt, welche vorzugsweise im telezentrischen Teil des Mikroskopstrahlenganges angeordnet sind. In Bezug auf eine pixelgenaue Abbildung des Objektes auf die CCD-Matrix einer CCD-Kamera weisen diese Reflektorschieber Nachteile auf, welche u. a. darin bestehen, dass, durch die Endanschläge der Schieber in der Führung bedingt, das Objekt oder Präparat leicht zur optischen Achse dejustiert werden kann. Insbesondere können dann z. B. sequentielle Aufnahmen von Objekten oder Präparaten mit unterschiedlichen Wellenlängen nur noch durch eine entsprechende Software zur Deckung gebracht werden, was einen erhöhten Aufwand erfordert.

Bei mikroskopischen Applikationen, die einen möglichst ungehinderten Zugang von Manipulatoren oder anderen Werkzeugen erfordern, mit welchen das Objekt beeinflusst oder manipuliert werden kann, unterliegt häufig der Raum oberhalb des Objektes besonderen restriktiven Anforderungen. Er muss weitestgehend frei und zugänglich sein, um ungehindert darin arbeiten und Manipulationen am Objekt vornehmen zu können. Solche Anforderungen können z. B. darin bestehen, dass bis zu fünf Manipulatoren unter 45° zur Horizontalebene, nach oben in Richtung des Objektivs verlaufend, zum Einsatz vorgesehen werden, welche entsprechend bedient werden müssen. Diese von vorn und seitlich angesetzten Manipulatoren beschränken beispielsweise den Bauraum einer notwendigen Objektivwechseleinrichtung und eventueller Illuminatorkomponenten derart, dass je nach dem Abstand vom Objekt bestimmte Breitenmaße und Abstände von der senkrecht verlaufenden optischen Achse des Mikroskops nicht überschritten werden dürfen bzw. eingehalten werden müssen.

In der DE 102 35 388.3 ist eine optische Anordnung, mit einem telezentrischen Strahlengang, z. B. eine mikroskopische Anordnung, vorgeschlagen worden, welche ein nach Unendlich abbildendes Objektiv und mindestens ein Okular und eine zwischen beiden in einem festen Abstand vom Objektiv angeordnete Tubuslinse umfasst. Im Raum zwischen dem Objektiv und der Tubuslinse existiert ein telezentrischer, d. h. paralleler Strahlengang. In diesem Teil des Strahlenganges werden z. B Strahlenteiler oder andere in einem Revolver angeordnete, in den Strahlengang einschaltbare, optische Bauelemente angeordnet.

Die EP 1 093 002 A2 offenbart eine Vorrichtung zum Wechseln von Objektiven in Mikroskopen, welche gewährleistet, dass bei einem Objektivwechsel eine Beschädigung von z. B. Manipulatoren oder von Objekten bzw. Präparaten, welche beobachtet oder an welchen Manipulationen vorgenommen werden sollen, ausgeschlossen ist. Erreicht wird dieses dadurch, dass ein Objektive tragender Objektivrevolver vorgesehen ist, welcher um eine schräg bezüglich der optischen Achse des Mikroskopstrahlenganges angeordnete Achse drehbar ist. Der Objektivrevolver des Mikroskops ist seitlich versetzt angeordnet, und dieser Versatz ist auf eine Seitenwand des Mikroskopstativs hin definiert. Durch diesen Versatz des Revolvers und die sich ergebende Neigung und Positionierung der Drehachse des Revolvers wird bei einem Objektivwechsel eine Bewegung im Bereich der Arbeitsstellung der Objektive erzeugt, welche im Wesentlichen linear ist und von der Stirnwand zur Rückwand des Mikroskopstativs verläuft.

Diese Vorrichtung bezieht sich nur auf einen allgemein bekannten Objektivrevolver, in welchem andere, den Strahlengang beeinflussende, optische Elemente nicht angeordnet werden können.

Eine Schnellwechselvorrichtung für dichroitische Strahlenteiler in Fluoreszenzmikroskopen ist in der US 6 683 735 B2 beschrieben. Es ist eine um eine Achse drehbare Scheibe im Mikroskopstrahlengang vorgesehen, welche die einzelnen Strahlenteiler und Filter umfasst. Die Scheibe wird durch einen Motor angetrieben, welcher durch einen Computer gesteuert wird. Durch eine Verstellung der Scheibe können die erforderlichen Teiler und Filter in den Strahlengang des Mikroskops eingebracht werden. Diese Vorrichtung besitzt jedoch einen nicht zu unterschätzenden Nachteil. Die Scheibe nimmt relativ viel Platz im Bereich des Strahlenganges ein, da der Durchmesser der Scheibe, um die einzelnem Teiler und Filter aufnehmen zu können, relativ groß dimensioniert sein muss.

In DE 36 27 185 A1 wird eine elektromagnetische Wechseleinrichtung zur Aufnahme von optisch wirksamen Elementen oder Systemen beschrieben, die direkt im Objektivrevolver integriert ist. Mit dieser kompakten Lösung lässt sich auf relativ einfache Art und Weise ein gewünschtes optisches Element in den Mikroskopstrahlengang einbringen. Bedingt durch die unmittelbare Anordnung der Wechseleinrichtung im Objektivrevolver hat diese Lösung aber den Nachteil, dass sowohl der fertigungstechnische Aufwand als auch der Aufwand der Justage der Elemente zueinander sehr hoch ist. Die Zuführung, beispielsweise eines Fluoreszenzanregungsstrahlenganges ist nicht möglich.

Ferner wird in JP 08136818 A eine mikroskopische Anordnung beschrieben, die mit einer dem Objektiv nachgeschalteten Wechselvorrichtung für optische Elemente versehen ist. Nachteilig bei dieser Anordnung ist, dass der Aufbau sehr kompliziert ist und ein ungehinderter Zugang zum Probenraum durch einen Anbau in Richtung des Beobachters nicht möglich ist.

US 2002/097486 A1 offenbart eine Wechseleinrichtung zur Aufnahme optischer Elemente für Mikroskope, die um die optische Achse des Mikroskopstrahlenganges drehbar gelagert ist. Nachteilig ist auch bei dieser Einrichtung, dass ein störungsfreies Manipulieren in Raum über dem nicht möglich ist.

So liegt der Erfindung die Aufgabe zu Grunde, ein Mikroskop mit einer Wechseleinrichtung zur Aufnahme optischer Elemente zu schaffen, mit welchem die Nachteile des Standes der Technik weitestgehend beseitigt werden und welche einen ungehinderten Zugang zu dem Raum über dem Objekt und somit ein störungsfreies Manipulieren in diesem Raum ermöglicht.

Erfindungsgemäß wird diese Aufgabe mit einem gemäß dem Patentanspruch 1 ausgebildeten Mikroskop gelöst. In den Unteransprüchen 2 und 3 sind weitere Ausführungsformen und Ausgestaltungen offenbart.

So ist es vorteilhaft, wenn die Drehachse der Wechseleinrichtung derart zur optischen Achse des Mikroskopstrahlenganges geneigt ist, dass der von einer Lichtquelle ausgehende Beleuchtungsstrahlengang nur auf das sich in der Arbeitsposition befindliche optische Element trifft.

Eine vorteilhafte Ausführung ergibt sich, wenn der die Vorrichtung tragende Halter am Stativkopf oder direkt am Mikroskopstativ auf einer in Richtung der optischen Achse verlaufenden Führung angeordnet ist.

Es ist vor allem ein Vorteil dieser speziellen Anordnung der Wechseleinrichtung, dass der Frontteil des Mikroskopstativs frei bleibt für die Anordnung von Manipulatoren.

Die Erfindung soll nachstehend an einem Ausführungsbeispiel näher erläutert werden. In der Zeichnung zeigen
- Fig. 1: vereinfacht eine Seitenansicht eines aufrechten Mikroskops mit einer Wechseleinrichtung und
- Fig. 2: eine Ansicht von vorn auf das Mikroskop nach Fig.1.

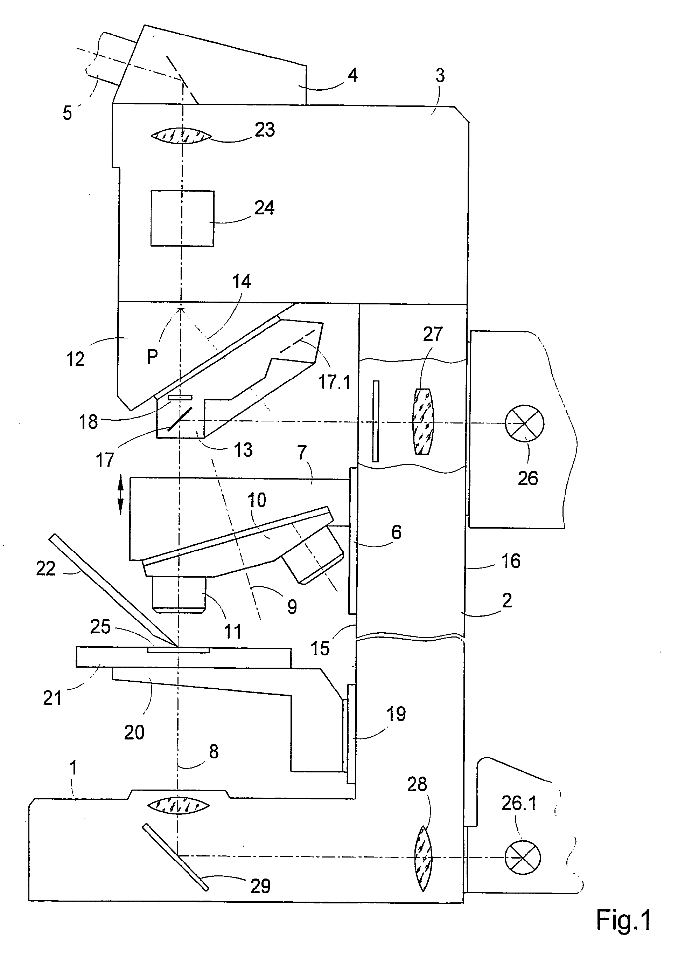

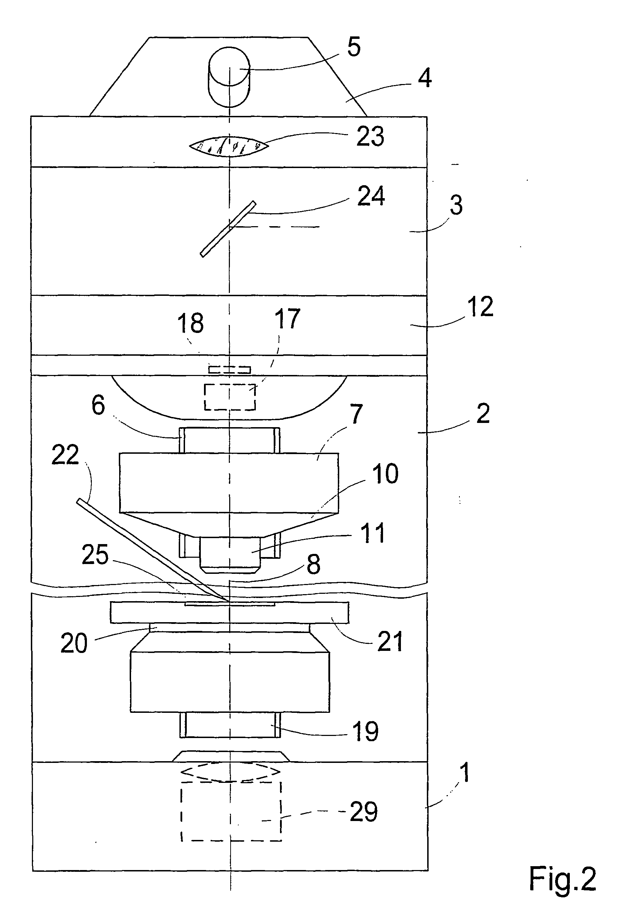

Das in den Fig.1 und 2 vereinfacht beispielsweise als aufrechtes Mikroskop dargestellte Mikroskop umfasst ein Gehäuse, welches im Wesentlichen aus einem Mikroskopfuß 1, einem Mikroskopstativ 2 und aus einem, am oberen Ende des Stativs 2 angeordneten Stativkopf 3 besteht, wobei sich auf dem Stativkopf 3 ein Okularträger 4 mit einem Okular 5 befindet. Auf dem Stativkopf 3 können auch andere Einrichtungen, wie z. B. fotografische Einrichtungen, angeordnet werden. Am Stativ 2 ist ferner auf Führungen 6 ein Objektivschlitten 7, vorzugsweise in Richtung der optischen Achse 8 des Mikroskopstrahlenganges verstellbar, angeordnet. Am Objektivschlitten 7 ist in an sich bekannter Weise ein um eine geneigt zur optischen Achse 8 verlaufenden Drehachse 9 verstellbarer Objektivrevolver 10 mit unterschiedlichen Objektiven 11 vorgesehen. Durch Drehung des Objektivrevolvers 10 um seine Drehachse 9 können die für den jeweiligen Zweck benötigten Objektive 11 in den Mikroskopstrahlengang eingebracht werden.

Am unteren Teil des Stativkopfes 3 ist ferner ein vorzugsweise auswechselbarer Halter 12, im Ausführungsbeispiel nach Fig. 1 und 2 über dem Objektivschlitten 7, vorgesehen, an dem die erfindungsgemäße, z. B. als eine Revolveranordnung ausgebildete Wechseleinrichtung 13 angeordnet ist, die um eine Drehachse 14 drehbar ist. Diese Drehachse 14 und die optische Achse 8 des Strahlenganges schneiden sich in einem Punkt P und definieren eine Ebene, welche im Wesentlichen senkrecht zur Ebene der Vorderwand 15 bzw. der Rückwand 16 des Mikroskopstativs 2 verläuft. Die durch die Drehachse 14 und die optische Achse 8 definierte Ebene liegt vorteilhaft in der Symmetrieebene des Mikroskops. In dieser Wechseleinrichtung 13 können beispielsweise Reflektoren 17; 17.1, Reflektorwürfel, optische Filter 18 der verschiedensten Art oder andere geeignete, den Mikroskopstrahlengang beeinflussende, optische Elemente einzeln oder in Kombination angeordnet werden. Diese Elemente sind im telezentrischen oder parallelen Teil des Mikroskopstrahlenganges, meist zwischen dem jeweiligen, im Strahlengang befindlichen Objektiv 11 und einer Tubuslinse 23 angeordnet, welche meist im Stativkopf 3 (bei aufrechten Mikroskopen) vorgesehen ist.

Am Mikroskopstativ ist unterhalb des Objektivschlittens 7 eine vorzugsweise auf Führungen in Richtung der optischen Achse 8 verstellbare Halterung 20 für einen Objekttisch 21 vorgesehen, auf welchem das zu untersuchende und/oder zu beobachtende Objekt 25 oder Präparat angeordnet wird. Zur Vornahme von Manipulationen am Objekt 25 sind Manipulatoren 22 oder andere geeignete Werkzeuge am Mikroskop vorgesehen, für die ein weitestgehender und ungehinderter Zugang zum Objekt 25 aus mehrerer Richtungen durch die erfindungsgemäße Revolveranordnung und damit ein umfassendes Manipulieren am Objekt 25 gewährleistet wird.

Im Stativkopf 3 können ferner, ebenfalls im telezentrischen Bereich des Mikroskopstrahlenganges, Mittel, beispielsweise in Form eines oder mehrerer Strahlenteilerwürfels 24, zum Ein- bzw. Ausblenden. von weiteren Strahlengängen angeordnet sein. Auch können Filter und/oder andere den Strahlengang beeinflussende, optische Elemente hier in den Strahlengang eingebracht werden (nicht in den Fig. 1 und 2 dargestellt).

Der Fig. 1 ist ferner zu entnehmen, dass im Mittelteil des Mikroskopstativs 2 beispielsweise ein weiterer Beleuchtungsstrahlengang vorgesehen ist mit einer Lichtquelle 26 und einer Linse 27. Dieser Beleuchtungsstrahlengang kann beispielsweise zur Auflichtbeleuchtung des Objektes 25 genutzt werden. Analog befindet sich im Mikroskopfuß 1 ein Beleuchtungsstrahlengang mit einer Lichtquelle 26.1, einer Linse 28 und mit einem Umlenkelement 29, welcher für Durchlichtbeleuchtung vorgesehen werden kann.

Der Halter 12, an welchem die Wechseleinrichtung 13 drehbar angeordnet ist, kann auch beispielsweise auf einer in Richtung der optischen Achse 8 verlaufenden Führung, welche am Mikroskopstativ 2 vorgesehen ist, verstellbar gelagert sein. wesentlich dabei ist lediglich, dass sich die Wechseleinrichtung 13 in telezentrischen Teil des Mikroskopstrahlenganges befindet. Eine solche Ausführung der Erfindung ist der Einfachheit halber in den Fig. 1 und 2 nicht dargestellt.

Die Erfindung wurde in Bezug auf eine besondere Ausführungsform beschrieben. Es ist für einen Fachmann jedoch selbstverständlich, dass Änderungen und Abwandlungen durchgeführt werden können, ohne dabei den Schutzbereich des Patentanspruchs 1 zu verlassen.

### Bezugszeichen

- 1: Mikroskopfuß
- 2: Mikroskopstativ
- 3: Stativkopf
- 4: Okularträger
- 5: Okular
- 6: Führung
- 7: Objektivschlitten
- 8: optische Achse
- 9: Drehachse
- 10: Objektivrevolver
- 11: Objektiv
- 12: Halter
- 13: Revolveranordnung
- 14: Drehachse
- 15: Vorderwand
- 16: Rückwand
- 17: Reflektor
- 17.1: Reflektor
- 18: Filter
- 19: Führung
- 20: Halterung
- 21: Objekttisch
- 22: Manipulator
- 23: Tubuslinse
- 24: Strahlenteilerwürfel
- 25: Objekt
- 26: Lichtquelle
- 26.1: Lichtquelle
- 27: Linse
- 28: Linse
- 29: Umlenkelement

## Patentansprüche

1. Mikroskop mit einer Wechseleinrichtung zur Aufnahme optischer Elemente (17), welches ein Seitenwände, eine Vorder- und eine Rückwand (15,16) sowie einen Stativkopf (3) und einen Stativfuß (1) umfassendes Stativ (2) besitzt an dem ein Objektivrevolver (10) mit untershiedlichen Objektiven (11) im Mikroskopstrahlengang vorgesehen ist wobei die mit einer Anzahl von optischen, den Mikroskopstrahlengang beeinflussenden, Elementen bestückte Wechseleinrichtung (13) im telezentrischen Teil des Mikroskopstrahlenganges zwischen Stativkopf (3) und Objektivrevolver (10) angeordnet ist und - zum Zwecke der Aufnahme der Wechseleinrichtung (13) am Stativkopf (3) oder am Stativ (2) ein auswechselbarer Halter (12) vorgesehen ist, **dadurch gekennzeichnet, dass**, die Wechseleinrichtung (13) um eine die optische Achse (8) des Mikroskopstrahlenganges schneidende und in der Symmetrieebene des Mikroskops liegende Drehachse (14) drehbar gelagert ist, welche zusammen mit optischen Achsen von im Mikroskop vorhandenen Strahlengängen in einer Ebene liegt, die im Wesentlichen senkrecht zur Vorderwand (15) des Mikroskopstativs (2) verläuft und, dass der Teil der Wechseleinrichtung (13), welcher sich nicht im Mikroskopstrahlengang befindet und der dem im Strahlengang befindlichen Teil der Wechseleinrichtung (13) diametral gegenüberliegt, zum Mikroskopstativ (2) gerichtet angeordnet und der Vorderwand (15) des Mikroskopstativs (2) benachbart iset.

2. Mikroskop mit einer Wechseleinrichtung zur Aufnahme optischer Elemente nach Anspruch 1, **dadurch gekennzeichnet, dass** die Drehachse (14) der Wechseleinrichtung (13)derart zur optischen Achse (8) des Mikroskopstrahlenganges geneigt ist, dass der von einer Lichtquelle (26) ausgehende Beleuchtungsstrahlengang nur auf das sich in der Arbeitsposition befindliche optische Element (17) trifft.

3. Mikroskop mit einer Wechseleinrichtung zur Aufnahme optischer Elemente nach Anspruch 1, **dadurch gekennzeichnet, dass** der Halter (12) zur Aufnahme der Wechseleinrichtung (13) am Stativ (2) auf einer in Richtung der optischen Achse (8) verlaufenden Führung verstellbar gelagert ist.

## Claims

1. Microscope with a changing apparatus for holding optical elements (17), having a stand (2) comprising sidewalls, a front and a rear wall (15, 16) and a stand head (3) and a stand base (1), with provision being made on said stand for an objective lens turret (10) with different objective lenses (11) in the microscope beam path, the changing apparatus (13) equipped with a number of optical elements which influence the microscope beam path being arranged in the telecentric part of the microscope beam path between stand head (3) and objective lens turret (10), and an interchangeable holder (12) being provided on the stand head (3) or on the stand (2) for the purpose of holding the changing apparatus (13), **characterized in that** the changing apparatus (13) is mounted in rotatable fashion about a rotational axis (14) which intersects the optical axis (8) of the microscope beam path and lies in the plane of symmetry of the microscope, which rotational axis lies in a plane together with optical axes of beam paths present in the microscope, said plane extending substantially perpendicular to the front wall (15) of the microscope stand (2), and **in that** the part of the changing apparatus (13) which is not situated in the microscope beam path and which lies diametrically opposite to the part of the changing apparatus (13) situated in the beam path is arranged directed towards the microscope stand (2) and neighbours the front wall (15) of the microscope stand (2).

2. Microscope with a changing apparatus for holding optical elements, according to Claim 1, **characterized in that** the rotational axis (14) of the changing apparatus (13) is inclined with respect to the optical axis (8) of the microscope beam path in such a way that the illumination beam path originating from a light source (26) only impinges on the optical element (17) situated in the operating position.

3. Microscope with a changing apparatus for holding optical elements, according to Claim 1, **characterized in that** the holder (12) for holding the changing apparatus (13) on the stand (2) is adjustably mounted on a guide extending in the direction of the optical axis (8).

## Revendications

1. Microscope avec un support d'éléments interchangeables pour accueillir des éléments optiques (17) possédant une paroi latérale, une paroi avant et une paroi arrière (15, 16) ainsi qu'un statif (2) comprenant une tête de statif (3) et un pied de statif (1), sur lequel est prévu un barillet d'objectifs (10) avec différents objectifs (11) dans le chemin de faisceau du microscope,
- dans lequel le support d'éléments interchangeables (13) équipé d'un nombre d'éléments optiques influençant le chemin de faisceau du microscope est disposé dans la partie télécentrique du chemin de faisceau du microscope entre la tête de statif (3) et le barillet d'objectifs (10) et
- dans lequel un support interchangeable (12) est prévu dans le but d'accueillir le support d'éléments interchangeables (13) sur la tête de statif (3) ou sur le statif (2),
**caractérisé en ce que** le support d'éléments interchangeables (13) repose de manière pivotante autour d'un axe de rotation (14) coupant l'axe optique (8) du chemin de faisceau du microscope et situé dans le plan de symétrie du microscope, qui de concert avec des axes optiques de chemins de faisceau du microscope, se trouve dans un plan essentiellement perpendiculaire à la paroi avant (15) du statif (2) du microscope, **en ce que** la partie du support d'éléments interchangeables (13), qui ne se trouve pas dans le chemin de faisceau du microscope et qui se trouve diamétralement en face de la partie du support d'éléments interchangeables (13) se trouvant dans le chemin de faisceau du microscope, est disposée orientée vers le statif (2) du microscope et au voisinage de la paroi avant (15) du statif (2) du microscope.

2. Microscope avec un support d'éléments interchangeables pour accueillir des éléments optiques selon la revendication 1, **caractérisé en ce que** l'axe de rotation (14) du support d'éléments interchangeables (13) est incliné par rapport à l'axe optique (8) du chemin de faisceau du microscope de telle sorte que le chemin de faisceau d'éclairage du microscope provenant d'une source lumineuse (26) ne frappe que l'élément optique (17) se trouvant dans la position d'utilisation.

3. Microscope avec un support d'éléments interchangeables pour accueillir des éléments optiques selon la revendication 1, **caractérisé en ce que** le support (12) pour accueillir le support d'éléments interchangeables (13) sur le statif (2) repose de manière réglable sur un guidage suivant la direction de l'axe optique (8).
